# EUROPÄISCHE PATENTANMELDUNG

(11) **EP 1 092 501 A2**
(43) Veröffentlichungstag der Anmeldung: **18.04.2001**
(21) Anmeldenummer: 00121359.4
(22) Anmeldetag: 11.10.2000
(51) Int. Cl.: B23Q 11/00

(54) **Vorrichtung zum Bearbeiten von Werkstücken im Wälzverfahren**

(30) Priorität: 14.10.1999 DE 19949491
(71) Anmelder: ZF FRIEDRICHSHAFEN Aktiengesellschaft, 88038 Friedrichshafen (DE)
(72) Erfinder: Riha, Werner, 94036 Passau (DE); Sicklinger, Josef, 94124 Büchlberg (DE)

(57) **Zusammenfassung**

Beim Bearbeiten von Werkstücken im Wälzverfahren wirkt sich die Form des Werkstücks (8), sofern sie nicht exakt rotationssymmetrisch ist, negativ auf die Qualität des zu bearbeitenden Werkstücks (8) aus. Ein Schwingungstilger ist mit dem Werkstück (8) verbunden und wirkt den Schwingungen, welche durch die Bearbeitung des Werkstücks (8) mit einem Werkzeug entstehen, entgegen. Die Eigenfrequenz des Schwingungstilgers ist so ausgelegt, daß die Frequenz, mit welcher der Schwingungstilger angeregt wird, größer ist als die Eigenfrequenz des Schwingungstilgers. Somit kann die Qualität des Werkstücks ohne Verlängerung der Bearbeitungszeit verbessert werden.

## Beschreibung

Die Erfindung bezieht sich auf eine Vorrichtung zum Bearbeiten von Werkstücken im Wälzverfahren nach der im Oberbegriff von Anspruch 1 näher definierten Art.

Im Wälzverfahren werden Werkstücke, z. B. Zahnräder, hergestellt, indem das Werkstück mit dem Werkzeug abwälzt. Nach einem Wärmebehandlungsverfahren wird in vielen Fällen die Form des Werkstücks so verändert, daß keine rotationssymmetrische Form mehr vorliegt, was zu Teilungsgesamtabweichungen in der Verzahnung eines Zahnrades führt. Diese lassen sich bei der Bearbeitung nicht wesentlich reduzieren, da Teilungsgesamtabweichungen die Bearbeitungskraft, infolge der nicht rotationssymmetrischen Form des Werkstücks bei einer Bearbeitung im Wälzverfahren permanent ändert, und somit ein ungleichmäßiger Abtrag entsteht.

Die DE 27 24 602 C3 offenbart eine Einrichtung zur Gleichlaufregelung einer Zahnradbearbeitungsmaschine, bei welcher das Werkstück im Wälzverfahren bearbeitet und während der Bearbeitung das Werkstück mit einem elektronisch geregelten elektrischen Antrieb angetrieben wird, um den sich verändernden Bearbeitungskräften entgegenzuwirken. Wird diese elektronische Wälzkopplung bei geringen Kontaktkräften des Werkstücks mit dem Werkzeug verwendet, wie es z. B. beim Abrichten des Werkzeugs auftritt, wird ein befriedigendes Ergebnis erreicht. Je größer die Kontaktkräfte sind, um so geringer ist der Einfluß der elektronischen Regelung auf das Bearbeitungsverfahren, da die Reaktionszeit des elektrischen Motors bei hohen Kräften zu lang ist und somit der Antrieb des Werkstücks den auftretenden Teilungsgesamtabweichungen nicht entgegenwirken kann.

Der vorliegenden Erfindung liegt die Aufgabe zugrunde, eine Vorrichtung zur Bearbeitung von Werkstücken im Wälzverfahren zu schaffen, bei welcher sich die Teilungsgesamtabweichungen des Werkstücks nicht negativ auf das Bearbeitungsverfahren auswirken.

Die Aufgabe wird mit einer, auch die kennzeichnenden Merkmale des Hauptanspruchs aufweisenden, gattungsgemäßen Vorrichtung zur Bearbeitung von Werkstücken im Wälzverfahren gelöst.

Erfindungsgemäß steht das Werkstück mit einem Schwingungstilger in Verbindung, welcher den durch die Formabweichungen des Werkstücks auftretenden Schwingungen während der Bearbeitung entgegenwirkt. Hierfür wird mindestens ein Drehschwingungstilger mit mindestens einer Tilgermasse mit einer Halterung des Werkstücks verbunden, so daß der das Werkstück anregenden Schwingung eine Gegenschwingung überlagert wird, welche die anregende Schwingung kompensiert. Bei den Erregerschwingungen, welche beim Bearbeiten entstehen, handelt es sich vorzugsweise um sinusförmige Schwingungen, welche z. B. durch die außermittige Aufnahme des Werkstücks oder durch eine Drei- oder Vierkant-Außenform welche durch die Wärmebehandlung des Werkstücks hervorgerufen wird, erzeugt wird. Vorzugsweise besteht der Schwingungstilger aus mindestens einer rotationsförmigen Masse, welche über Federn mit den Werkstück verbunden ist. Um mehreren Erregungsfrequenzen entgegenzuwirken, kann der Schwingungstilger aus mehreren Massen, welche über Federn mit dem Werkstück verbunden sind, aufgebaut sein. Hierbei ist jedes Feder-Masse-System auf eine bestimmte Erregerfrequenz auszulegen wobei jedes Feder-Masse-System erst bei Erregung durch die Frequenz in welcher es ausgelegt ist, voll wirksam wird. Die Feder-Masse-Systeme des Drehschwingungstilgers sind so auszulegen, daß zeitgleich die Amplituden des Drehschwingungstilgers den Erregeramplituden entgegenwirken. Hierzu ist vorzugsweise der Schwingungstilger so auszulegen, daß die Frequenz, mit welcher der Schwingungstilger angereget wird, größer ist als die Eigenfrequenz des Schwingungstilgers. Bei mehreren Erregerfrequenzen ist der Schwingungstilger so auszulegen, daß jede Anregungsfrequenz größer ist als die zur Anregungsfrequenz passende Eigenfrequenz des jeweiligen Schwingungstilgers. Um einen kompakten Schwingungstilger zu schaffen, ist eine rotationsförmige Masse vorzugsweise über Blattfedern mit dem Werkstück verbunden. Vorzugsweise werden stark gewellte Blattfedern verwendet, welche eine geringere Längsdehnung aufweisen und hierdurch eine bessere Federlinearität erreicht wird. Der Einsatz von Standard-Blattfedern ist ebenfalls möglich. Über die Federkonstante in Verbindung mit der Masse des Schwingungstilgers kann der Schwingungstilger auf die Erregerfrequenz abgestimmt werden. Um bei höheren Drehzahlen äußere Einflüsse, wie z. B. Luftverwirbelungen, auf den Schwingungstilger zu reduzieren, ist der Schwingungstilger vorzugsweise mit einer Umhüllung umgeben, welche den Schwingungstilger kapselt. Innerhalb dieser Umhüllung können mehrere Schwingungstilger angeordnet sein, welche auf mehrere Erregerfrequenzen abgestimmt sind. Um eine mechanische Beschädigung des Schwingungstilgers zu verhindern, kann der Schwingungstilger mit einer mechanischen Amplituden-Begrenzung ausgestattet sein. Der Schwingungstilger steht mit dem Werkstück in Verbindung und wirkt den Erregerfrequenzen, welche hauptsächlich aus Teilungsgesamtabweichungen des Werkstücks entstehen, entgegen und kann bei Vorrichtungen mit mechanischer Wälzkopplung, d. h. einer Vorrichtung, bei welcher die Drehzahl des Werkstücks mechanisch mit der Drehzahl des Werkzeugs verbunden ist sowie einer Vorrichtung mit elektronisch geregelter Wälzkopplung, d. h. einem elektrisch angetriebenen Werkstück, dessen Drehzahl elektronisch mit der Drehzahl des Werkzeugs abgestimmt wird und einer Vorrichtung ohne Wälzkopplung, d. h. einer Vorrichtung, bei welcher das Werkstück keinen zusätzlichen Antrieb hat, eingesetzt werden. Durch die beschriebene Vorrichtung zur Bearbeitung von Werkstücken im Wälzverfahren können sehr genaue Verzahnungsqualitäten erzeugt werden, ohne die Bearbeitungszeit zu verlängern.

Weitere Merkmale sind der Figuren-Beschreibung zu entnehmen.
Es zeigen:

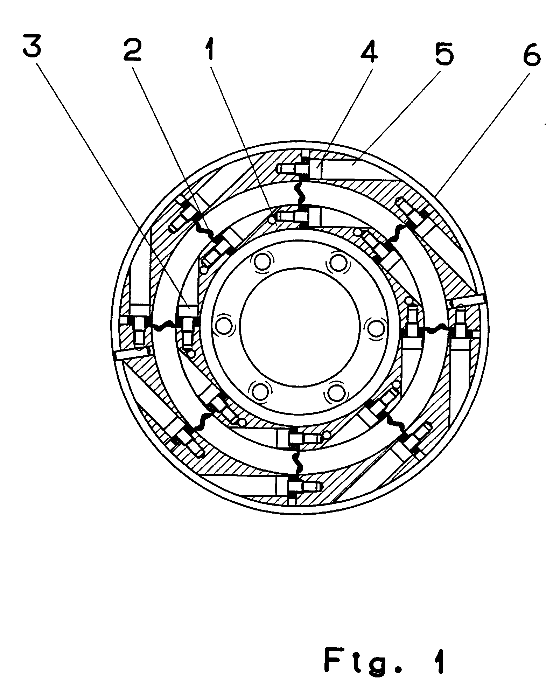

- Fig. 1: einen Schwingungstilger und

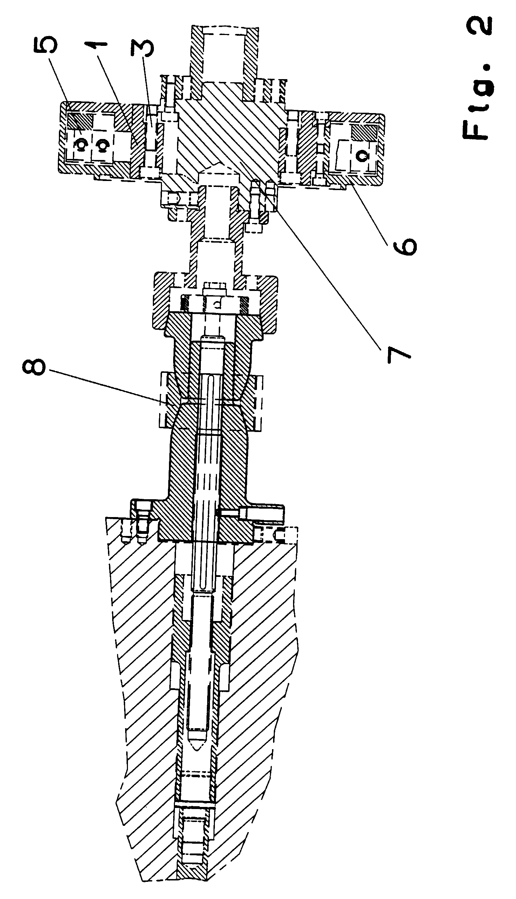

- Fig. 2: eine Anordnung des Werkstücks mit dem Schwingungstilger.

### Fig. 1:

Der Schwingungstilger besteht aus einem Federhalter 1, mit welchem Federn 2 über Befestigungselemente 3 verbunden sind. Die Federn 2 weisen eine gewellte Form auf, um eine günstige Federlinearität zu gewährleisten. Über die Dicke der Federn 2 kann die Federkonstante variiert werden. Die Federn 2 sind über Befestigungselemente 4 mit einer Tilgermasse 5 verbunden. Die Tilgermasse 5 ist von einer Hülle 6 umgeben, um die Tilgermasse vor äußeren Einflüssen zu schützen.

### Fig. 2:

Ein Federhalter 1 ist über Befestigungselemente 3 mit einer Welle 7 verbunden, welche so mit einem Werkstück 8 kraftschlüssig verbunden ist, daß der Federhalter 1 die gleiche Drehzahl wie das Werkstück 8 aufweist. Auf dem Federhalter 1 ist eine Hülle 6 angeordnet, welche die Tilgermasse 5 vor äußeren Einflüssen schützt. Wird das Werkstück 8 mit einem nicht dargestellten Werkzeug in Eingriff gebracht, so entstehen, da das Werkstück 8 nicht exakt rotationsförmig ist, Erregerfrequenzen, welche bei der Bearbeitung die Verzahnungsqualität negativ beeinflussen. Mit den Erregerfrequenzen wird der Schwingungstilger angeregt und wirkt der Erregeramplitude entgegen. Hierdurch kann ohne Verlängerung der Bearbeitungszeit auch bei Bearbeitungsverfahren mit erhöhten Kontaktkräften, wie z. B. dem Leistungshonen, eine gute Verzahnungsqualität erreicht werden.

### Bezugszeichen

- 1: Federhalter
- 2: Feder
- 3: Befestigungselemente
- 4: Befestigungselemente
- 5: Tilgermasse
- 6: Hülle
- 7: Welle
- 8: Werkstück

## Patentansprüche

1. Vorrichtung zum Bearbeiten von Werkstücken (8) im Wälzverfahren mit einem Werkzeug, welches mit einem drehbar gelagerten Werkstück (8) abwälzt, dadurch **gekennzeichnet,** daß das Werkstück (8) mit einem Schwingungstilger in direkter Verbindung steht.

2. Vorrichtung zum Bearbeiten von Werkstücken nach Anspruch 1, dadurch **gekennzeichnet,** daß der Schwingungstilger aus mindestens einer rotationsförmigen Masse (5) und mit dieser und dem Werkstück verbundenen Federn (2) besteht.

3. Vorrichtung zum Bearbeiten von Werkstücken nach Anspruch 2, dadurch **gekennzeichnet,** daß die Federn (2) des Schwingungstilgers als gewellte Blattfedern ausgebildet sind.

4. Vorrichtung zum Bearbeiten von Werkstücken nach Anspruch 1, dadurch **gekennzeichnet,** daß die Frequenz, mit welcher der Schwingungstilger angeregt wird, größer ist als die Eigenfrequenz des Schwingungstilgers.

5. Vorrichtung zum Bearbeiten von Werkstücken nach Anspruch 1, dadurch **gekennzeichnet,** daß der Schwingungstilger von einer Umhüllung (6) umgeben ist.

6. Vorrichtung zum Bearbeiten von Werkstücken nach Anspruch 1, dadurch **gekennzeichnet,** daß mehrere Schwingungstilger mit verschiedenen Eigenfrequenzen miteinander und dem Werkstück verbunden sind.

7. Vorrichtung zum Bearbeiten von Werkstücken nach Anspruch 1, dadurch **gekennzeichnet,** daß der Schwingungstilger kraftschlüssig mit dem Werkstück (8) verbunden ist.
